# EUROPÄISCHE PATENTSCHRIFT

(11) **EP 0 711 236 B1**
(45) Veröffentlichungstag und Bekanntmachung des Hinweises auf die Patenterteilung: **26.03.1997**
(21) Anmeldenummer: 94926196.0
(22) Anmeldetag: 15.08.1994
(51) Int. Cl.: B64F 5/00, G05B 19/408

(54) **VERFAHREN ZUR BEARBEITUNG EINES OBJEKTES, INSBESONDERE EINES FLUGZEUGS**
PROCESS FOR TREATING AN OBJECT, IN PARTICULAR AN AEROPLANE
PROCEDE DE TRAITEMENT D'UN OBJET, NOTAMMENT D'UN AVION

(30) Priorität: 13.08.1993 DE 4327268; 11.09.1993 DE 4330846
(43) Veröffentlichungstag der Anmeldung: 15.05.1996
(73) Patentinhaber: PUTZMEISTER-WERK MASCHINENFABRIK GMBH, 72631 Aichtal (DE)
(72) Erfinder: WANNER, Martin-Christoph, D-70599 Stuttgart (DE); HERKOMMER, Thomas, Fred, D-70839 Gerlingen (DE)
(74) Vertreter: Wolf, Eckhard, Dr.-Ing.
(86) Internationale Anmeldenummer: EP9402716
(87) Internationale Veröffentlichungsnummer: WO9505310

(56) Entgegenhaltungen:
- EP-A- 0 341 134
- EP-A- 0 435 011
- DE-A- 2 701 823
- DE-A- 4 035 519
- US-A- 3 835 498
- US-A- 4 453 085
- US-A- 4 590 578
- US-A- 4 826 391
- DORNIER POST, 30. Juni 1993 Seiten 29 - 30 EIBERT 'GROSSES ANWENDUNGSGEBIET FUR ENTFERNUNGSBILDKAMERA'

## Beschreibung

Die Erfindung betrifft ein Verfahren und eine Anordnung zur Bearbeitung eines Objekts, insbesondere eines Flugzeugs, gemäß den Oberbegriffen der Ansprüche 1 und 19.

Ein derartiges Verfahren ist der EP-A-0 341 134 zu entnehmen. Eine derartige Anordnung ist durch das Dokument DORNIER POST 2/93, 30. Juni 1993, Seiten 29-30, "Großes Anwendungsgebiet für Entfernungsbildkamera" bekannt.

Mit der US 3,835,498 ist eine Vorrichtung zum Reinigen von Flugzeugen oder Schiffen bekannt geworden. Diese Vorrichtung weist mehrere an einem ortsfesten Kran angeordnete drehbare Waschbürsten auf, mit denen die Oberfläche des Flugzeugs gereinigt werden kann. Bei dieser Vorrichtung bedarf es jedoch einer drehbaren Plattform für das Flugzeug, so daß dieses vor dem Waschkran gedreht werden kann. Die Waschbürsten sind entweder ortsfest oder sind entlang definierter Richtungen beweglich. Somit es es erforderlich, daß das Flugzeug an die Waschvorrichtung herangeführt werden muß und daß das Flugzeug und die Waschvorrichtung eine bestimmte Relativlage zueinander einnehmen müssen. Positionierungsfehler sind nahezu unvermeidbar.

In der DE-A-2 701 823 ist ein Bearbeitungsgerät mit einem Gelenkarm zur Reinigung großvolumiger Körper, insbesondere von Flugzeugen, beschrieben, das unter Verwendung einer Laser-Leitstrahlsteuerung an dem Großobjekt entlang verfahren wird.

Aus der DE-A-4035519 ist es bereits bekannt, einen Großmanipulator mit einem fernsteuerbaren Bürstenkopf auszustatten. Der bekannte Großmanipulator weist einen aus mehreren an ihren Enden gegeneinander verschwenkbaren Auslegern zusammengesetzten Knickmast auf, dessen Grundausleger an einem auf einem motorgetriebenen Fahrgestell angeordneten Lagerbock um eine vertikale Achse drehbar gelagert ist und dessen Endausleger ein mit dem Bürstenkopf bestückbares Multigelenk aufweist. Aus dieser Druckschrift ist es auch bekannt, den Bürstenkopf mit Sensoren auszustatten, die eine regelbare Nachführung des Bürstenkopfes gegenüber der zu bearbeitenden Oberfläche nach Maßgabe eines beim Reinigungsvorgang am Sensor auftretenden, abgreifbaren Sensorsignals ermöglichen. Auch hier muß der Großmanipulator positionsgenau zum Flugzeug stehen.

Ausgehend von der US 3,835,498 liegt der Erfindung die Aufgabe zugrunde, ein Verfahren und eine Anordnung der eingangs genannten Art derart weiterzuentwickeln, daß in besonders einfacher Art und Weise ein wenigstens nahezu vollständiger Ausgleich von bei der Aufstellung des Bearbeitungsgeräts vor dem zu bearbeitenden Objekt auftretenden Positionierungsfehlern möglich ist.

Diese Aufgabe wird erfindungsgemäß durch das Verfahren gemäß Anspruch 1 und die Anordnung gemäß Anspruch 19 gelöst. Weiterentwicklungen ergeben sich aus den Unteransprüchen.

Durch die erfindungsgemäßen Maßnahmen wird in besonders vorteilhafter Art und Weise eine Korrektur von Positionierungsfehlern des Bearbeitungsgeräts relativ zu dem zu bearbeitenden Objekt ermöglicht. Durch den vorgesehenen Austausch der auf den vordefinierten Referenzpunkt bezogenen Ablaufsteuerung durch eine Ablaufsteuerung eines Rasterpunktes des Abstellfelds, welcher der aktuellen Position des Bearbeitungsgeräts am nächsten liegt, wird in besonders einfacher Art und Weise erreicht, daß die bisher vorgesehene, komplexe und daher aufwendige on-line-Überwachung der Bearbeitungseinheit im allgemeinen entfallen kann, indem jeweils eine auf den optimalen Bezugspunkt bezogene Ablaufsteuerung durch eine Ablaufsteuerung ersetzt wird, die für einen der aktuellen Position des Bearbeitungsgeräts am nächsten liegenden Rasterpunkt des Abstellfelds in vorteilhafter Art und Weise off-line erzeugt und in einem Speicher abgelegt wurde.

Eine vorteilhafte Weiterbildung der Erfindung sieht vor, daß mindestens einem Rasterpunkt des Abstellfeldes eine Ablaufsteuerung zugeordnet ist, die in Abhängigkeit des Relativabstandes zwischen der aktuellen Position des Bearbeitungsgeräts und diesem Rasterpunkt des Abstandsbereichs variierbar ist. Durch diese Maßnahme ist es auch möglich, die Anzahl der erforderlichen Rasterpunkte des Abstellfeldes zu verringern, da diese on-line-Korrektur des Positionierungsfehlers des Bearbeitungsgeräts es in vorteilhafter Art und Weise ermöglicht, mit größeren Abständen zwischen den einzelnen Rasterpunkten, also mit einem weitmaschigerem Raster, zu arbeiten, wobei in vorteilhafter Art und Weise die Anzahl der für ein Abstellfeld zu erstellenden Ablaufsteuerungen reduziert wird. Durch die vorgesehene on-line-Korrektur des Positionsfehlers ist es außerdem möglich, etwaige Toleranzen oder Abweichungen des zu bearbeitenden Objekts von seinen standardmäßig vorgesehenen und für die Erstellung der Ablaufsteuerungen vorgegebenen Dimensionen individuell zu kompensieren.

Eine weitere vorteilhafte Weiterbildung der Erfindung sieht vor, daß die Ablaufsteuerung mindestens eines Rasterpunktes des Abstellfelds in einen nur von der Relativposition des Rasterpunktes zum vordefinierten Referenzpunkt abhängigen Teil und in einen im wesentlichen nur vom Relativabstand zwischen der aktuellen Position des Bearbeitungsgeräts und diesem Rasterpunkt abhängig ist. Durch diese Maßnahmen wird in vorteilhafter Art und Weise erreicht, daß die zwischen dem Erreichen der aktuellen Position des Bearbeitungsgeräts und dem Beginn des Bearbeitungsvorgangs verstreichende Zeit minimiert werden kann, da der nur vom Rasterpunkt abhängige, off-line erstellte Teil der den Bearbeitungsvorgang kontrollierenden Ablaufsteuerung bereits durchgeführt werden kann, während die vom Relativabstand abhängigen Bewegungsabläufe des Bearbeitungsvorgangs wäjremddessem on-line bestimmt werden.

Gemäß einer weiteren vorteilhaften Weiterbildung der Erfindung kann daher vorzugsweise vorgesehen sein, daß die mindestens eine Bearbeitungseinheit des Bearbeitungsgeräts durch den off-line erstellten Teil der Steuerung in eine Position relativ zu dem zu bearbeitenden Objekt gebracht wird, in der auch im ungünstigsten Fall des Relativabstandes zwischen Rasterpunkt und aktueller Position des Bearbeitungsgeräts keine zu einer Beschädigung oder Beeinträchtigung des zu bearbeitenden Objekts führende Kollision zwischen Bearbeitungseinheit und Objekt auftreten kann.

Bei einem bevorzugten, nachfolgend näher beschriebenen Ausführungsbeispiel wird das Bearbeitungsgerät von einem auf einem Fahrgestell angeordneten Großmanipulator gebildet, der in eine vorgegebene Position zum Großobjekt verfahren und dort abgestellt wird und bei welchem ein vorzugsweise als rotierender Bürstenkopf ausgebildetes Werkzeug mittels eines aus mehreren, an Dreh- und/oder Schubgelenken gegeneinander verschwenk- oder verschiebbaren Auslegern und gegebenenfalls einem am Endausleger angeordneten Multigelenk bestehenden, auf dem Fahrgestell angeordneten Knickmasts über die Objektoberfläche bewegt wird.

Das Fahrgestell wird innerhalb des begrenzten zweidimensionalen Abstellfeldes im Abstand von dem zu bearbeitenden Großobjekt stationiert, und die Gelenke des Knickmasts und/oder des Multigelenks werden im Zuge der Oberflächenbearbeitung nach Maßgabe einer der aktuellen Position des Fahrgestells innerhalb des Abstellfeldes zugeordneten Folge von vorgegebenen Gelenkkoordinatensätzen, die der Ablaufsteuerung entsprechen, angesteuert, und das Werkzeug wird dabei entlang einem vorgegebenen Bearbeitungsweg über die Objektoberfläche bewegt.

Eine bevorzugte Ausgestaltung der Erfindung sieht dabei vor, daß das Abstellfeld durch ein begrenztes zweidimensionales Entfernungsraster unterteilt wird, daß zu jedem Rasterpunkt des Entfernungsrasters eine Folge von Stützpunkten eines Bearbeitungswegs des Werkzeugs definierenden Gelenkkoordinatensätzen vorgegeben und als Gelenkkoordinatendatei in einer Datenbank einer Datenverarbeitungsanlage abgespeichert wird, und daß die positionsbezogenen Gelenkkoordinatensätze durch Interpolation aus den in der Datenbank abgespeicherten Gelenkkoordinatendateien nach Maßgabe der aktuellen Position des Fahrgestells innerhalb des Entfernungsrasters berechnet und als Arbeitsdatei abgespeichert werden, bevor die Oberflächenverarbeitung unter Verwendung der aus der Arbeitsdatei ausgelesenen Gelenkkoordinatensätze und gegebenenfalls zusätzlicher bewegungsbezogener Parameter ausgelöst wird. Die aus der Arbeitsdatei ausgelesenen Gelenkkoordinatensätze können nach Maßgabe von vorzugsweise an jedem Stützpunkt des Bearbeitungsweges abgefragten Sensorsignalen nachgeführt werden. Zu diesem Zweck kann beispielsweise der an dem Werkzeug angreifende Reibungs- oder Torsionswiderstand oder der Anpreßdruck gemessen und als Sensorsignal zur Nachführung der Gelenkkoordinaten abgegriffen werden. Entsprechend können auch andere pyhsikalische Gröpen, z.B. der Abstand des Werkzeugs vom Objekt oder eine sich aufgrund von Deformationen des Unterbaus ergebende variable Neigung des Großmanipulators, gemessen und als Sensorsignal abgegriffen werden. Um auch beim Nachführen der Gelenkkoordinaten unerwünschte Kollisionen zu vermeiden, ist es zweckmäßig, die nachgeführten Gelenkkoordinatensätze durch Vergleich mit zu benachbarten Rasterpunkten des Entfernungsrasters abgespeicherten Gelenkkoordinaten unter Berücksichtigung vorgegebener Toleranzgrenzen hinsichtlich Kollisionsfreiheit zu überprüfen.

Bei einer bevorzugten Anordnung zur Durchführung des erfindungsgemäßen Verfahrens, bei welcher der Großmanipulator einen aus mehreren an Drehgelenken mittels hydraulischer oder motorischer Antriebsaggregate gegeneinander verschwenkbaren Auslegern bestehenden, auf einem Drehlagerbock eines motorgetriebenen Fahrgestells mit seinem Grundausleger um eine Hochachse drehbar gelagerten Knickmast und ein am Endausleger des Knickmasts oder am freien Ende eines am Endausleger aungeordneten, mehrere Schub- und/oder Drehgelenke aufweisenden Multigelenks angeordnetes, vorzugsweise als rotierender Bürstenkopf ausgebildetes Werkzeug aufweist, wird zur Lösung der vorstehend angegebenen Aufgabe vorgeschlagen, daß am Fahrgestell eine gegen das zu bearbeitende Großobjekt ausrichtbare optoelekronische Entfernungsbildkamera angeordnet und eine mit den Entfernungsbildsignalen der Entfernungsbildkamera beaufschlagte, rechnergestützte Auswerteelektronik als Anfahr- und Positionierhilfe und zur Einmessung des Großmanipulators relativ zu dem zu bearbeitenden Großobjekt vorgesehen ist. Die Entfernungsbildkamera ist dabei zweckmäßig in der Nähe des Drehlagerbocks starr oder beweglich, insbesondere um eine Hochachse schwenkbar und/oder um mindestens eine Horizontalachse neigbar am Großmanipulator angeordnet.

Um eine Zuordnung zwischen den durch die Entfernungsbildkamera ermittelten Koordinaten und den Werkzeugkoordinaten des Knickmastes herzustellen, weist die Auswerteelektronik gemäß der Erfindung ein Programmteil zur Normalisierung der Gelenkkoordinaten des Knickmasts nach Maßgabe der unmittelbar und über die Elektronenbildkamera relativ zu einem ortsfesten, vorzugsweise kubischen Eichkörper gemessenen Werkzeugkoordinaten auf. Bei dieser Normalisierung werden Positionsfehler des Großroboters bedingt durch Deformationen der Ausleger, Nullagen-Offset der Winkel- und Wegaufnehmer und Verwindungen im Unterbau des Knickauslegers und des Fahrgestells ermittelt.

Dei Auswerteelektronik weist ferner zweckmäßig eine Speicheranordnung zur Abspeicherung von Entfernungsbilddaten markanter Ausschnitte des Großobjekts aus der Sicht eines vorgegebenen Abstellfeldes sowie eine Softwareroutine zum Vergleich der bei in Reichweite des Knickmasts vor dem Großobjekt positionierten Großmanipulator von der Entfernungsbildkamera aufgenommenen Entfernungsbilddaten mit den gespeicherten Entfernungsbilddaten und koordinatenmäßiger Zuordnung der Großmanipulatorposition innerhalb des vorgebenen begrenzten Abstellfeldes auf. Vorteilhafterweise ist das Abstellfeld durch ein zweidimensionales Entfernungsraster unterteilt, wobei jedem Rasterpunkt des Entfernungsrasters eine Gelenkkoordinatendatei bzw. ein Bewegungsprogramm innerhabl einer Datenbank zugeordnet ist, worin eine Folge von Gelenkkoordinatensätzen des Knickmasts entlang einem vom Werkzeug auf der Objektoberfläche zu durchlaufenden Bearbeitungsweg abgespeichert ist.

Zur Messung der Gelenkkoordinaten ist jedem Gelenk des Knickmasts und gegebenenfalls des Multigelenks ein Koordinatenaufnehmer, vorzugsweise in Form eines Winkel- oder Wegaufnehmers zugeordnet, an dessen Ausgang die betreffende Gelenkkoordinate abgreifbar ist.

Vorteilhafterweise weist die Auswerteelektronik ein Programm zur Berechnung und Abspeicherung einer für den Bearbeitungsvorgang bestimmten Folgen von positionsbezogenen Gelenkkoordinatensätzen durch Interpolation aus den abgespeicherten Gelenkkoordinatensätzen nach Maßgabe der Abweichung der aktuellen Position des Großmanipulators von den nächstliegenden Rasterpunkten innerhalb des vorgebenen Entfernungsrasters auf.

Für die Durchführung des Bearbeitungsvorgangs weist die Auswerteelektronik einen rechnergestützten Schaltungsteil zur Ansteuerung der Antriebsaggregate der Knickmastgelenke nach Maßgabe der Abweichung der an den Koordinatenaufnehmern augenblicklich abgegriffenen Gelenkkoordinaten von den zugehörigen Werten der abgespeicherten Gelenkkoordinatensätze auf. Um Toleranzabweichungen kompensieren zu können, weist das Werkzeug einen auf den Abstand von der zu bearbeitenden Oberfläche, seinen Bearbeitungswiderstand oder seine Eindringtiefe in die zu bearbeitende Oberfläche ansprechenden Sensor auf, wobei von dem Sensorsignal Korrektursignale zur Nachführung der Antriebsaggregate der Knickmastgelenke ableitbar sind.

Um dazuhin Deformationen des Unterbaus des Großmanipulators während des Waschvorgangs kompensieren zu können, ist den Schwenk- und/oder Neigungsachsen der Entfernungsbildkamera mindestens ein Neigungsheber zugeordnet, von dessen Ausgangssignalen Korrektursignale zur Nachführung der Antriebsaggregate ableitbar sind.

Im folgenden wird die Erfindung anhand eines in der Zeichnung in schematischer Weise dargestellten Ausführungsbeispiels näher erläutert. Es zeigen:
- Figur 1: eine Seitenansicht eines fahrbaren Großmanipulators mit einem Bürstenkopf zum Waschen von Flugzeugen in eingeklappter Stellung;

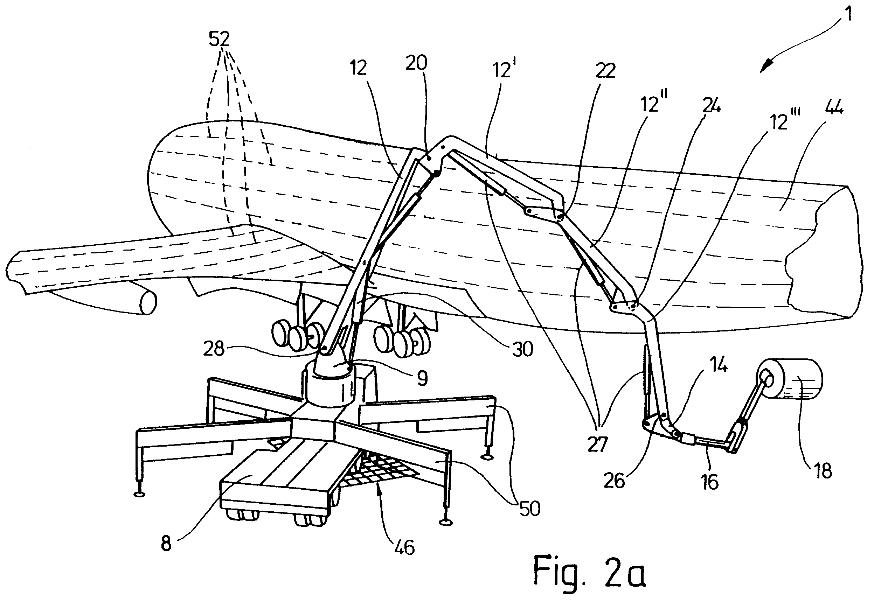

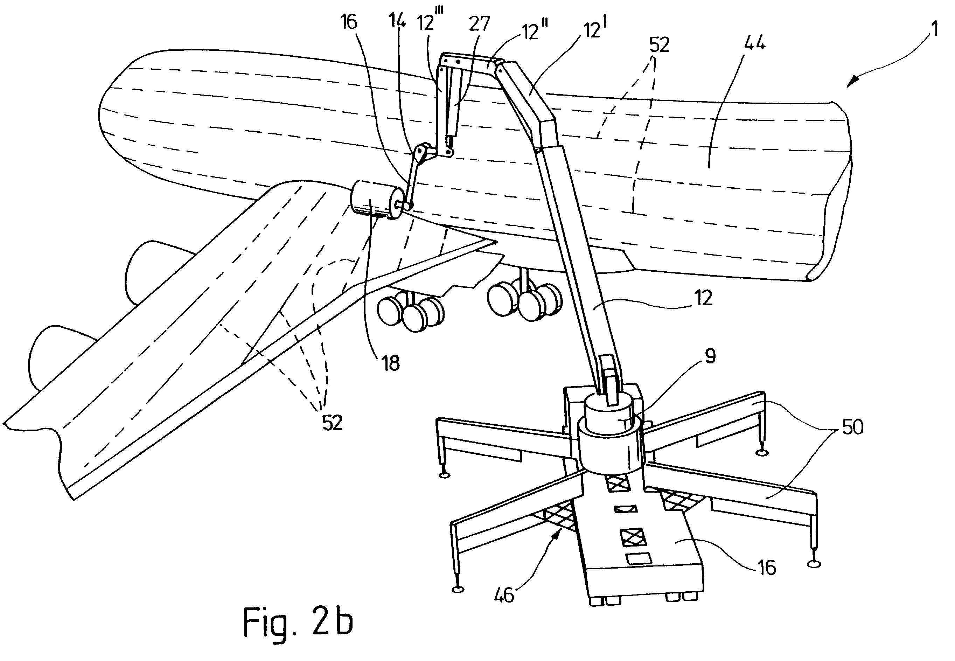

- Figur 2a und 2b: zwei schaubildliche Darstellungen des Großmanipulators in Bearbeitungsposition vor einem Flugzeug;
- Figur 3: eine Draufsicht auf das aufgerasterte Abstellfeld für den Großmanipulator nach Figur 2a und 2b.

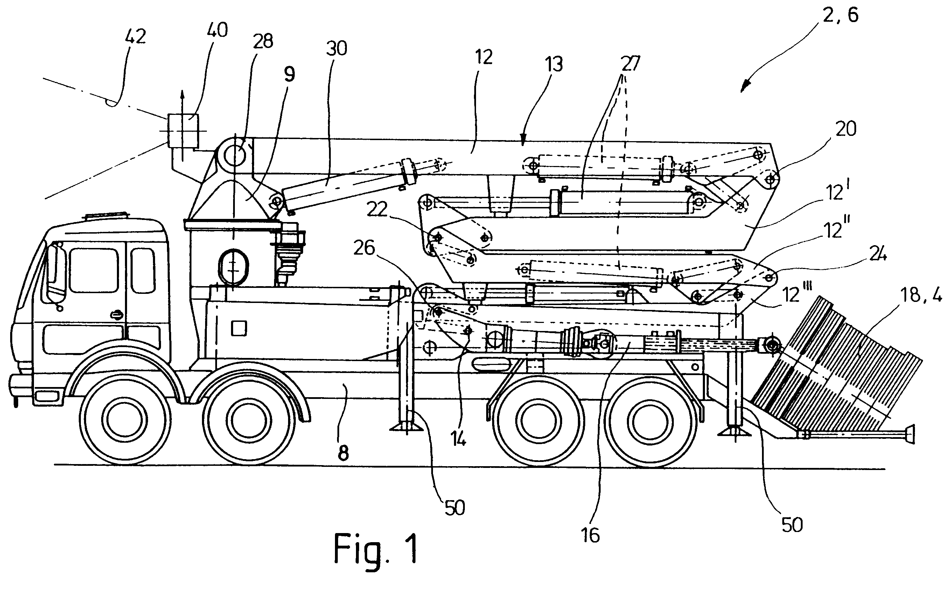

Der in der Figur 1 dargestellte mobile Großmanipulator 6 stellt ein bevorzugtes Ausführungsbeispiel eines Bearbeitungsgeräts 2 dar und besteht im wesentlichen aus einem auf einem Drehlagerbock 9 eines motorgetriebenen Fahrgestells 8 mit seinem Grundausleger 12 um eine vertikale Achse drehbar gelagerten Knickmast 13, einem am Endausleger 14 des Knickmasts 13 angeordneten Multigelenk 16 und einem am freien Ende des Multigelenks lösbar befestigten Bürstenkopf 18 als Bearbeitungseinheit 4. Die fünf Ausleger 12, 12', 12'', 12''' und 14 des Knickmasts 13 sind an ihren einander zugewandten Enden an Gelenken 20, 22, 24, 26 um horizontale Achsen begrenzt verschwenkbar miteinander verbunden. Das Verschwenken erfolgt mittels Hydrozylindern 27, die an geeigneten Stellen zwischen den Auslegern angeordnet sind. Der Grundausleger 12 ist an einem horizontalen Lager 28 mittels eines Hydroantriebs 30 schwenkbar am Drehlagerbock 9 gelagert. Diese Anordnung ermöglicht es, mit dem Bürstenkopf 18 beliebige Oberflächenkonturen innerhalb der von den Auslegern aufgespannten Ebene abzufahren. Mit Hilfe des motorisch verstellbaren Multigelenks 16 ist es zudem möglich, den Bürstenkopf 18 um mehrere Dreh- und Schubachsen gegenüber dem Endausleger 14 in sechs Freiheitsgraden zu bewegen.

Im Bereich des Drehlagerbocks 9 ist eine optoelektronische Entfernungsbildkamera 40 in Form eines 3-D-Laserscanners angeordnet, die einen dreidimensionalen Raum innerhalb des Blickfensters 42 erfaßt und bezüglich der Entfernung von einem Meßobjekt 44 digitalisiert. Die Entfernungsbildkamera 40 ist in ausreichender Höhe über dem Fahrgestell 8 angeordnet, um vom Blickfenster 42 signifikante Stellen des Meßobjekts 44 einmessen zu können. Die Entfernungsbildkamera 40 arbeitet mit einem Laserstrahl, der mit einer bestimmten Taktfrequenz über den Öffnungswinkel des Blickfensters 42 durchgefahren wird. Die Auswertung der Entfernungssignale, die sich aus einer Zeitdifferenzmessung ergeben, läßt erkennen, ob und in welcher Entfernung eine reflektierende Fläche vorhanden ist.

Um die Entfernungsmessung mit der Entfernungsbildkamera 40 und die Auslenkung des Knickmasts 13 unter Berücksichtigung verschiedener Knickmastkonfigurationen aufeinander abzustimmen, ist eine Normalisierung des Manipulators bezüglich der Entfernungsbildkamera 40 notwendig. Bei der Normalisierung werden die Nullagen der Manipulatorachsen 20, 22, 24, 26, 28 festgelegt. Diese Nullagen werden über eine geschlossene kinematische Kette bestimmt, die unter Verwendung eines Meßwürfels die Meßergebnisse der Entfernungsbildkamera zu den Auslenkungen des Knickmasts in Beziehung setzt. Der Meßwürfel wird dabei so orientiert, daß über die Entfernungsbildkamera 40 eine Ecke angepeilt wird und diese Ecke als Referenzpunkt für die Positionierung des Endauslegers 14 des Knickmasts 13 verwendet wird. Hierbei werden die Winkellagen der Gelenke bei einer Mehrzahl Knickmast-Konfigurationen bestimmt. Dadurch ergeben sich Parameter für ein Gleichungssystem, aufgrund dessen die Koordinatentransformation zwischen der Elektronenbildkamera 40 und dem Manipulator 13 festgelegt werden kann. Mit diesen Messungen werden die Nullagen der einzelnen Gelenke ermittelt, unter Berücksichtigung der Deformationen in den einzelnen Auslegern (12, 12', 12'', 12''', 14), die von vornherein nicht exakt definierbar sind. Die Messungen werden bei verschiedenen Abständen des Meßwürfels von der Entfernungsbildkamera 40 druchgeführt, um die verschiedenen Konstellationen des Manipulators unter Berücksichtigung der Nullagenfehler und der Deformationen sowie der Orientierung der Entfernungsbildkamera 40 bezüglich des Manipulatorsystems zu berücksichtigen.

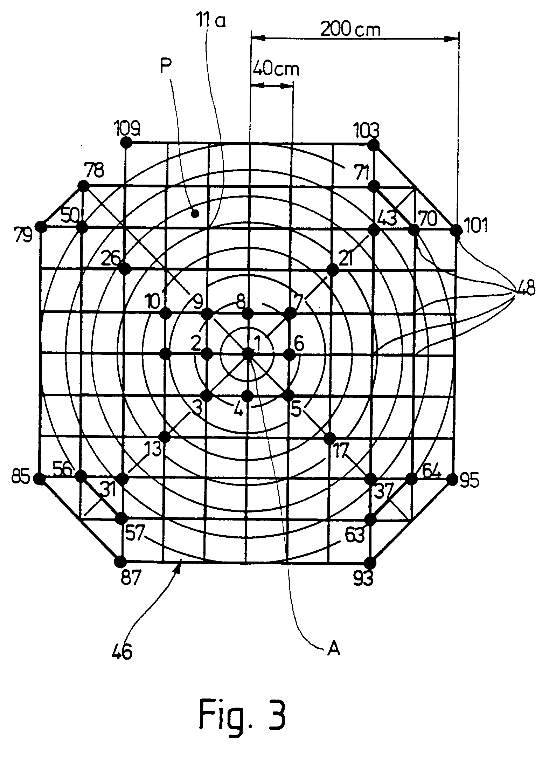

Um den Großmanipulator 6 in eine Waschposition vor dem Flugzeug 44 zu bringen, muß dieser im Zuge des Anfahrvorganges definiert abgestellt werden, damit alle bei einem Waschprogramm zu durchfahrenden Oberflächenstellen in der Reichtweite des Knickmasts 13 mit der Waschbürste 18 liegen. Um unnötige Komplikationen beim Anfahren und Positionieren des Großmanipulators zu vermeiden, wird in jeder Waschposition ein gegebenenfalls virtuelles Abstellfeld 46 mit einem Durchmesser von etwa 4 m definiert, das seinerseits in ein rechtwinkliges Raster mit einem Rasterabstand zwischen den einzelnen Rasterpunkten 48 und 40 cm unterteilt ist (Figur 3). Der Rasterabstand braucht dabei nicht genauer sein als die Genauigkeit des zu vermessenden Objekts. Dabei ist zu berücksichtigen, daß bei Flugzeugen schon aufgrund von Toleranzen zwischen den einzelnen Exemplaren eines bestimmten Typs und aufgrund unterschiedlicher Betankung, Beladung und Temperaturzustände sich Maßdifferenzen von 50 cm und mehr ergeben können. Anstelle eines kreisrunden Abstellfeldes 46 sind auch Felder denkbar, die die Form eines Polygons, insbesondere eines Rechtsecks oder eines Quadrats, aufweist, Es ist dem Fachmann ohne weiteres ersichtlich, daß die geometrische Form des Abstellfeldes 46 konstellationsabhängig in weiten Grenzen frei gewählt werden kann, und daß die vorliegend beschriebene kreisrunde Ausgestaltung nur exemplarischen Charakter besitzt und das beschriebene Verfahren keinesfalls darauf beschränkt ist. Desweiteren beschränkt das in Figur 3 dargestellte äquidistante Raster die Allgemeinheit der folgenden Ausführungen nicht, da diese in entsprechender Art und Weise für ein nicht-äquidistantes Raster und sogar für eine chaotisch verteilte Menge von Rasterpunkten Gültigkeit haben.

Die über die Entfernungsbildkamera 40 erzeugten Bilddaten werden in einer Auswerteschaltung und einem Bordrechner ausgewertet. In einem Speichermedium des Bordrechners ist für jeden zu bearbeitenden Flugzeugtyp und für jedes anzufahrende Abstellfeld 46 entweder das komplette Flugzeug 44 oder ein signifikanter Ausschnitt des Flugzeugs 44 bezogen auf das Blickfenster 42 der Entfernungsbildkamera 40 als Referenzbild abgespeichert. Als Anfahrhilfe wird beim Anfahren des Abstellfeldes 46 von der Entfernungsbildkamera 40 laufend ein Entfernungsbild des betreffenden Flugzeugausschnitts erzeugt und mit dem abgespeicherten Referenzbild verglichen. Daraus lassen sich Richtungs- und Positionsdaten ableiten, die dem Fahrer Anweisungen für die Fahrtrichtung und die Entfernung geben. Grundsätzlich können die sich hieraus ergebenden Abweichungssignale auch unmittelbar in Fahr- und Lenksignale für das Fahrgestell 8 umgesetzt werden. Ziel der Anfahrhilfe ist es, den Großmanipulator 6 auf dem Abstellfeld 46 in Reichweite des Flugzeugs 44 zu positionieren und hinsichtlich des Kurswinkels zu orientieren. Nach Erreichen des Abstellfeldes 46 wird das Fahrgestell 8 durch Ausschwenken und Absenken der Stützbeine 50 auf dem Untergrund abgestützt und dadurch relativ zum Flugzeug 44 positioniert.

Sodann kann die Einmessung des Großmanipulators 6, d.h. die Bestimmung der Position innerhalb des Rasterfeldes 46 und die Orientierung relativ zum Flugzeug 44 durchgeführt werden. Dies erfolgt ebenfalls mit Hilfe der Entfernungsbildkamera 40 durch Vergleich mit einem abgespeicherten Referenzmuster. Da die Entfernungsbildkamera 40 am Knickmast 13 angeordnet ist, muß sichergestellt sein, daß dessen Lage bei der Bestimmung des Kurswinkels mit berücksichtigt wird. Nach erfolgter Einmessung werden die Neigungsgeber an der Entfernungsbildkamera 40 erfaßt und zu Null gesetzt. Bei einer Bewegung des Knickmastes 13 wird dann der Relativwinkel aufgrund der Neigung der Standfläche im Bewegungsprogramm berücksichtigt.

Durch das Rasterfeld 46 werden fiktive Aufstellungsorte 1 bis 109 (Figur 3) festgelegt, für die jeweils ein offline (also auf einem externen Rechner) erstelltes komplettes Waschprogramm abgelegt ist. Als Waschprogrammdaten sind eine Vielzahl von Datensätzen, die die Winkellagen eines jeden Gelenks definieren, abgespeichert (Gelenkkoordinatensätze). Mehrere derartiger Gelenkkoordinatensätze bilden einen Bearbeitungsweg 52 entlang der Flugzeugoberfläche, die den geometrischen Ort des Bürstenkopfes 18 beim Waschvorgang definieren. Das Waschprogramm wird auf dem externen Rechner so überprüft, daß keine Kollision mit dem Objekt 1 und mit eventuell vorhandenen Docks und Hallenteilen stattfinden kann. Der Abstand zwischen den einzelnen Koordinatenstützpunkten beträgt auf der Flugzeugoberfläche im Mittel 30 cm. Bei der Einmessung wird nun die genaue Position der Entfernungsbildkamera 40 bezüglich des Flugzeugs 44 bestimmt und damit der exakte Platz innerhalb des Rasterfelds 46. Vom nächstliegenden Rasterpunkt 11a aus werden dann die Gelenkkoordinaten durch Interpolation auf die aktuelle Position P umgerechnet. Diese Daten werden in einer Datei im Arbeitsspeicher der Manipulatorsteuerung als aktuelles Waschprogramm abgelegt, bevor das Waschprogramm über die Manipulatorsteuerung ausgelöst wird. Durch die vier Nachbarpunkte 48 innerhalb des Rasterfeldes 46 und die zugelassenen Toleranzen von beispielsweise +/- 50 cm wird außerdem der Kollisionsraum der einzelnen Gelenke festgelegt. Dieser vier Nachparpunkte, umgesetzt in Gelenkkoordinaten, beschreiben also den Raum, in dem sich die Enden der Knickmastausleger bewegen dürfen.

Das Verfahren sieht vor, daß das dem Referenzpunkt A vorgegebene Programm durch ein Programm ersetzt wird, welches für den der aktuellen Position P nächstgelegenen Rasterpunkt 11a abgelegt worden ist. Bei diesem Verfahren wird also das der aktuellen Position P nächstliegende Programm verwendet, wodurch der Vorteil erzielt wird, daß eine on-line Anpassung des Programms an die noch bestehende Abweichung nicht erforderlich ist, wodurch eine deutliche Verminderung der Rüstzeit erreicht wird.

Die oben beschriebene Verfahrensvariante erlaubt die Korrektur eines Positionierungsfehlers bei der Aufstellung des Großmanipulators 6 relativ zu dem zu bearbeitenden Objekt 1 bis auf einen Rest-Positionsfehler, welcher kleiner oder gleich dem halben Abstand zwischen zwei einander diagonal gegenüberliegenden Rasterpunkten 11 des Abstellfeldes 46 ist. Für eine Vielzahl von Anwendungen ist eine derartige Genauigkeit ausreichend. Es versteht sich hier von selbst, daß dieser Rest-Positionsfehler noch weiter verkleinert werden kann, indem ein engmaschigeres Gitternetz, also ein Raster mit einem verminderten Abstand zwischen zwei Rasterpunkten 11, verwendet wird.

Wenn diese Vorbereitungen getroffen sind, kann der eigentliche Waschvorgang beginnen. Hierzu wird der Knickmast zunächst über ein Ausfaltprogramm entfaltet. Durch sukzessiven Abruf der Gelenkkoordinaten aus der Arbeitsdatei erhält man Sollwerte, die durch die Waschbürste angefahren werden, wobei der Ist- und Sollwertvergleich an jedem einzelnen Gelenk durch zugeordnete Koordinatengeber erfolgt. Wegen Deformationen des Flugzeugs 44 und des Unterbaus, Ungenauigkeiten des Verfahrens und dynamische Fehler des Geräts muß eine Feinkompensation durchgeführt werden. Um das geforderte Waschergebnis zu erzielen, muß der Manipulator 6 mit einer Genauigkeit von ca. 10 mm hinsichtlich der vorgeschriebenen Eindringtiefe der Waschbürste in die Oberfläche verfahren werden. Dies ist nur durch eine zusätzliche Sensorik zu erreichen, die die genannten Fehler durch Messung des Anpreßdruckes und durch Zustellung der Hilfsachsen des Multigelenks 16 kompensiert. Bei den Hilfsachsen handelt es sich um eine Schwenkachse, die Orientierungsfehler des Bürstenkopfs 18 ausgleicht.

Grundsätzlich ist es möglich, die Entfernungsbildkamera 40 auch während des Ablaufs eines Waschprogramms mitlaufen zu lassen und zur Kollisionsüberwachung einzusetzen. Die Entfernungsbildkamera 40 kann hierbei einzelne Gelenke und das Flugzeug 44 vermessen und hinsichtlich Kollisionen kontrollieren. Dies könnte wichtig sein, wenn beispielsweise ein Meßwertaufnehmer an einem der Gelenke ausfällt und falsche Meßwerte liefert, die vom Bediener und vom Rechner nicht erkannt werden.

Alternativ oder ergänzend hierzu kann vorgesehen sein, daß Lage- und Abmessungstoleranzen sowie Deformationstoleranzen des Flugszeugs 44 und/oder Toleranzen des Großmanipulators 6 kompensiert werden. Als Beispiel für derartige Toleranzen des Flugzeugs 44 sollen exemplarisch die Dimensionsabweichungen, die auch bei Flugzeugen der gleichen Baureihe und des gleichen Bautyps auftreten von den der Ablaufsteuerung zugrunde gelegten Normabmessungen, die von Luftlinie zu Luftlinie eventuell leicht unterschiedlich sein können, z.B. in der Anordnung von Antennen, Sensorik, Triebwerken, Fairings und Landeklappen etc., sowie die Deformationstoleranzen, welche durch unterschiedliche Beladungszustände des Flugzeugs 44 und Umwelteinflüsse, z.B. Temperatur, hervorgerufen werden, erwähnt werden. Diese rasterpunktspezifischen Programme werden on-line an diese Rahmenbedingungen angepaßt.

Zusammenfassend ist folgendes festzustellen: Die Erfindung bezieht sich auf ein Verfahren und eine Anordnung insbesondere zur Oberflächenreinigung von Flugzeugen 44, bei welchem ein auf einem Fahrgestell 8 angeordneter Großmanipulator 6 in eine vorgegebene Position innerhalb der Reichweite zum Flugzeug 44 verfahren und dort abgestellt wird und bei welchem ein rotierender Bürstenkopf 18 mittels eines aus mehreren an Dreh- und/oder Schubgelenken gegeneinander verschwenk- oder verschiebbaren Auslegern 12, 12', 12'', 12''', 14 und einem am Endausleger 14 angeordneten Multigelenk 16 bestehenden, auf dem Fahrgestell 8 angeordneten Knickmasts 13 über die Objektoberfläche bewegt wird. Um auch bei ungenauer Positionierung des Großmanipulators 6 vor dem Flugzeug 44 einen zuverlässigen und kollisionsfreien Waschvorgang zu gewährleisten, wird der Großmanipulator 6 innerhalb eines begrenzten zweidimensionalen gegebenenfalls virtuellen Abstellfeldes 46 im Abstand vom Flugzeug 44 stationiert, während die Gelenke 20 bis 28 des Knickmastes 13 und/oder des Multigelenks 16 im Zuge der Oberflächenbearbeitung nach Maßangabe einer der aktuellen Position des Großmanipulators 6 innerhalb des Abstellfeldes 46 zugeordneten Folge von Gelenkkoordiantensätzen angesteuert werden und der Bürstenkopf 18 dabei entlang einem vorgegebenen Bearbeitungsweg über die Objektoberfläche bewegt wird.

## Patentansprüche

1. Verfahren zur Bearbeitung, insbesondere zur Oberflächenreinigung eines Objekts (1), insbesondere eines Flugzeugs (44), eines Schiffes, eines Bauwerks usw., mittels eines mindestens eine Bearbeitungseinheit (4) aufweisenden Bearbeitungsgeräts (2), bei dem das Bearbeitungsgerät (2) in ein Abstellfeld (46) um einen vordefinierten Referenzpunkt (A) verfahren und im Abstand zum Objekt (1) positioniert wird, wobei der vordefinierte Referenzpunkt (A) des Abstellfelds (46) eine fixierte Lagebeziehung zu mindestens einem Bezugspunkt des Objekts (1) aufweist, bei dem der am Objekt (1) vorzunehmende Bearbeitungsvorgang zumindest teilweise mittels einer Ablaufsteuerung für die mit dem Objekt (1) in Wirkkontakt tretende Bearbeitungseinheit (4) des Bearbeitungsgeräts (2) durchgeführt wird, wobei die von der Ablaufsteuerung gesteuerten räumlichen Bewegungen der mindestens einen Bearbeitungseinheit (4) auf den vordefinierten Punkt (A) bezogen sind, dadurch gekennzeichnet, daß im Abstellfeld (46) des Bearbeitungsgeräts (2) eine bestimmte Anzahl von Rasterfelder begrenzenden Rasterpunkten (11, 11a) festgelegt wird, daß für jeden Rasterpunkt (11, 11a) eine Ablaufsteuerung für die mit den zu bearbeitenden Objekten (1) in Wirkkontakt tretende mindestens eine Bearbeitungseinheit (4) des Bearbeitungsgeräts (2) erstellt ist bzw. wird, wobei die von dieser Ablaufsteuerung des jeweiligen Rasterpunkts (11a) gesteuerte räumliche Bewegung der mindestens einen Bearbeitungseinheit (4) auf diesen Rasterpunkt (11a) des Abstellfelds (46) bezogen ist, daß die aktuelle Position (P) des Bearbeitungsgeräts (2) bezüglich des Abstellfelds (46) bestimmt wird, daß aus der Menge der dem Abstellfeld (46) zugeordneten Rasterpunkte derjenige Rasterpunkt (11a) ermittelt wird, der den geringsten Abstand zur aktuellen Position (P) des Bearbeitungsgeräts (2) aufweist, und daß für die Durchführung des Bearbeitungsvorgangs zur Steuerung der mindestens einen Bearbeitungseinheit (4) die diesem Rasterpunkt (11a) zugeordnete Ablaufsteuerung verwendet wird oder daß von diesem Rasterpunkt (11a) aus durch Interpolation eine Ablaufsteuerung für die aktuelle Position (P) errechnet, im Arbeitsspeicher der Manipulatorsteuerung als aktuelles Arbeitsprogramm abgelegt und sodann verwendet wird.

2. Verfahren nach Anspruch 1, dadurch gekennzeichnet, daß die dem Referenzpunkt (A) und die den Rasterpunkten (11a) zugeordnete Ablaufsteuerungen off-line erstellt werden.

3. Verfahren nach Anspruch 1 oder 2, dadurch gekennzeichnet, daß die dem vordefinierten Referenzpunkt (A) und den Rasterpunkten (11a) zugeordneten Ablaufsteuerungen als charakteristischen Parameter die Positionsdifferenz zwischen dem räumlich fixierten Bezugspunkt des Objekts (1) und den räumlich fixierten Rasterpunkten (11a) aufweisen.

4. Verfahren nach einem der Ansprüche 1 bis 3, dadurch gekennzeichnet, daß die Rasterpunkte (11a) in einem äquidistanten Raster angeordnet sind.

5. Verfahren nach einem der vorhergehenden Ansprüche, dadurch gekennzeichnet, daß das Abstellfeld (46) als Kreis mit dem Radius R oder als, vorzugsweise regelmäßiges, Vieleck um den vordefinierten Referenzpunkt (A) gewählt wird.

6. Verfahren nach einem der Ansprüche 1 bis 5, dadurch gekennzeichnet, daß mindestens eine einem Rasterpunkt (11a) des Abstellfelds (46) zugeordnete Ablaufsteuerung als weiteren charakteristischen Parameter
a) die Relativposition zwischen dem der aktuellen Position (P) des Bearbeitungsgeräts (2) nächstliegenden Rasterpunkt (11a) und der aktuellen Position (P) des Bearbeitungsgeräts (2), oder
b) Abweichungen des Objekts (1) von bei der Festlegung der Ablaufsteuerung zugrunde gelegten Normabmessungen, oder
c) die Meßsignale einer Überwachungseinrichtung der mindestens einen Bearbeitungseinheit (4) verwendet.

7. Verfahren nach einem der Ansprüche 1 bis 6, dadurch gekennzeichnet, daß mindestens eine Ablaufsteuerung derart strukturiert ist, daß sie einen nur von der Position des dieser Ablaufsteuerung zugeordneten Rasterpunkts (11a) abhängigen Basisteil und einen vom Abstand der aktuellen Position (P) des Bearbeitungsgeräts (2) von diesem Rasterpunkt (11a) und/oder zusätzlichen Adaptionsparametern abhängigen Korrektur/Adaptionsteil aufweist.

8. Verfahren nach einem der Ansprüche 1 bis 7, dadurch gekennzeichnet, daß die durch den nur rasterpunktabhängigen Teil der Ablaufsteuerung kontrollierten Bewegungen der mindestens einen Bearbeitungseinheit (4) des Bearbeitungsgeräts (2) durchgeführt werden, während im wesentlichen die zur Adaption der Ablaufsteuerung erforderlichen on-line-Korrekturen der Ablaufsteuerung ermittelt werden.

9. Verfahren nach einem der Ansprüche 1 bis 8, dadurch gekennzeichnet, daß zur Bestimmung der aktuellen Position (P) des Bearbeitungsgeräts (2) ein Entfernungsbild eines vorgegebenen Ausschnitts des zu bearbeitenden Objekts (1) mit einer optoelektronischen Entfernungsbildkamera (40) aufgenommen und mit einem Referenzbild dieses Ausschnitts verglichen wird.

10. Verfahren nach Anspruch 9, dadurch gekennzeichnet, daß die sich dabei ergebenden Abweichungen in vorzugsweise optisch und/oder akustisch anzeigbare Lenk- und Fahrsignale außerhalb des Abstellfeldes (46) oder in positionsbestimmende Einmeßsignale innerhalb des Abstellfeldes (46) umgesetzt werden.

11. Verfahren nach einem der vorhergehenden Ansprüche, dadurch gekennzeichnet, daß bei einem aus mehreren an Drehgelenken (20, 22, 24, 26, 28) und/oder Schubgelenken gegeneinander verschwenk- oder verschiebbaren Auslegern (12, 12', 12'', 12''', 14) und ggf. einem am Endausleger (14) angeordneten Multigelenk (16) bestehenden, und einem auf einem Fahrgestell (8) angeordneten Knickmasts (13) bestehende Bearbeitungsgerät (2) die Gelenke (20 bis 28) des Knickmast (13) und/oder des Multigelenks (16) im Zuge der Bearbeitung nach Maßgabe einer der aktuellen Position des Bearbeitungsgeräts (2) innerhalb des Abstellfeldes (46) zugeordneten Folge von vorgegebenen Gelenkkoordinatensätzen als Ablaufsteuerung angesteuert werden.

12. Verfahren nach einem der vorhergehenden Ansprüche, dadurch gekennzeichnet, daß die Bearbeitungseinheit (4) entlang einem vorgegebenen Bearbeitungsweg (52) über die Objektoberfläche bewegt wird.

13. Verfahren nach einem der vorhergehenden Ansprüche, dadurch gekennzeichnet, daß die positionsbezogene Ablaufsteuerung durch Interpolation aus den in einer Datenbank abgespeicherten Ablaufsteuerungen nach Maßgabe der aktuellen Position (P) des Bearbeitungsgeräts (2) innerhalb des Abstellfeldes (46) berechnet und in einer Arbeitsdatei abgespeichert werden, bevor die Bearbeitung unter Verwendung der aus der Arbeitsdatei ausgelesenen Ablaufsteuerungen und ggf. zusätzlicher bewegungsbezogener Parameter ausgelöst wird.

14. Verfahren nach Anspruch 13, dadurch gekennzeichnet, daß die aus der Arbeitsdatei ausgelesenen Ablaufsteuerungen nach Maßgabe von vorzugsweise an jedem Stützpunkt des Bearbeitungsweges abgefragten Sensorsignale nachgeführt werden.

15. Verfahren nach einem der vorhergehenden Ansprüche, dadurch gekennzeichnet, daß der an der Bearbeitungseinheit (4) abgegriffene Reibungswiderstand, Torsionswiderstand oder Anpreßdruck gemessen und als Sensorsignal abgegriffen wird.

16. Verfahren nach einem der vorhergehenden Ansprüche, dadurch gekennzeichnet, daß der Abstand der Bearbeitungseinheit (4) vom Objekt (1) berührungslos gemessen und als Sensorsignal abgegriffen wird.

17. Verfahren nach einem der vorhergehenden Ansprüche, dadurch gekennzeichnet, daß die Neigung des Bearbeitungsgeräts (2) gegenüber einem Unterbau oder gegenüber dem Objekt (1) gemessen und als Sensorsignal abgegriffen wird.

18. Verfahren nach einem der Ansprüche 14 bis 17, dadurch gekennzeichnet, daß die nachgeführten Ablaufsteuerungen durch Vergleich mit zu benachbarten Rasterpunkten (11a) abgespeicherten Ablaufsteuerungen unter Berücksichtigung vorgegebener Toleranzgrenzen hinsichtlich Kollisionsfreiheit überprüft werden.

19. Anordnung zur Bearbeitung, insbesondere zur Oberflächenreinigung von Objekten (1), wie Flugzeugen (44), Schiffen oder Bauwerken, mit einem mindestens eine Bearbeitungseinheit (4) aufweisenden Bearbeitungsgerät (2), mit einer am Bearbeitungsgerät (2) angeordneten, gegen das zu bearbeitende Objekt (1) ausrichtbaren optoelektronischen Entfernungsbildkamera (40) und einer mit den Entfernungsbildsignalen der Entfernungsbildkamera (40) beaufschlagten rechnergestützten Auswerteelektronik dadurch gekennzeichnet, daß die Auswerteelektronik eine Speicheranordnung zur Abspeicherung von Entfernungsbilddaten des Objekts (1) aus der Sicht mehrerer Rasterpunkte eines vorgegebenen Abstellfeldes (46) sowie eine Softwareroutine zum Vergleich der bei in Reichweite eines Knickmasts (13) vor dem Objekt (1) positioniertem Bearbeitungsgerät (2) von der Entfernungsbildkamera (40) aufgenommenen Entfernungsbilddaten mit den gespeicherten Entfernungsbilddaten und zur koordinatenmäßigen Ermittlung der Position (P) des Bearbeitungsgeräts (2) innerhalb des vorgegebenen begrenzten Abstellfeldes (46) sowie zur Zuordnung dieser Position (P) zu dem nächstgelegenen Rasterpunkt (11a) aufweist.

20. Anordnung nach Anspruch 19, dadurch gekennzeichnet, daß das Bearbeitungsgerät (2) mehrere an Drehgelenken (20, 22, 24, 26, 28) mittels hydraulischer oder motorischer Antriebsaggregate (30) gegeneinander verschwenkbare Ausleger (12, 12', 12'', 12''', 14), einen auf einem Drehlagerbock (9) des motorgetriebenen Fahrgestells (8) mit seinem Grundausleger (12) um eine Hochachse drehbar gelagerten Knickmast (13) und die am Endausleger (14) des Knickmasts (13) oder am freien Ende eines am Endausleger (14) angeordneten, mehrere Schub- und/oder Drehgelenke aufweisenden Multigelenks (16) angeordnete, vorzugsweise als rotierenden Bürstenkopf (18) ausgebildete Bearbeitungseinheit (4) aufweist.

21. Anordnung nach Anspruch 19 oder 20, dadurch gekennzeichnet, daß die Entfernungsbildkamera (40) in der Nähe des Drehlagerbocks (9) starr oder beweglich, insbesondere um eine Hochachse schwenkbar und/oder um mindestens eine Horizontalachse neigbar am Bearbeitungsgerät (2) angeordnet ist.

22. Anordnung nach einem der Ansprüche 20 oder 21, dadurch gekennzeichnet, daß jedem Gelenk (20 bis 28) des Knickmasts (13) und ggf. des Multigelenks (16) ein Koordinatenaufnehmer, vorzugsweise in Form eines Winkel- oder Wegaufnehmers zugeordnet ist, an dessen Ausgang ein der betreffenden Gelenkkoordinate entsprechender Wert elektrisch abgreifbar ist.

23. Anordnung nach Anspruch 22, dadurch gekennzeichnet, daß die Auswerteelektronik einen rechnergestützten Schaltungsteil zur Normalisierung der Gelenkkoordinaten nach Maßangabe der unmittelbar und über die Entfernungsbildkamera (40) relativ zu einem ortsfesten, vorzugsweise kubischen Eichkörper gemessenen Werkzeugkoordinaten aufweist.

24. Anorndung nach einem der Ansprüche 19 bis 23, dadurch gekennzeichnet, daß das Abstellfeld (46) durch ein zweidimensionales Rasterfeld (46) unterteilt ist, daß jedem Rasterpunkt (11) innerhalb des Rasterfelds (46) eine Ablaufsteuerung, eine Gelenkkoordinatendatei oder ein Bewegungsprogramm innerhalb einer Datenbank zugeordnet ist, worin eine Folge von Einzelbewegungen oder Gelenkkoordinatensätzen des Knickmastes (13) entlang einem von der Bearbeitungseinheit (4) auf der Objektoberfläche zu durchlaufenden Bearbeitungsweg abgespeichert wird.

25. Anordnung nach Anspruch 24, dadurch gekennzeichnet, daß die Auswerteelektronik eine Softwareroutine zur Berechnung und Abspeicherung einer für den Bearbeitungsvorgang bestimmten Folge von Ablaufsteuerungen oder Gelenkkoordinatensätzen durch Interpolation aus den abgespeicherten Ablaufsteuerungen oder Gelenkkoordinatensätzen nach Maßgabe der Abweichung der aktuellen Position (P) des Bearbeitungsgeräts (2) von den nächstliegenden Rasterpunkten (11a) innerhalb des vorgegebenen Rasterfeldes (46) aufweist.

26. Anordnung nach Anspruch 24 oder 25, dadurch gekennzeichnet, daß die Auswerteelektronik einen rechnergestützten Schaltungsteil zur Ansteuerung der Antriebsaggregate (30) der Knickmastgelenke (20 bis 28) nach Maßgabe der Abweichung der an den Koordinatenaufnehmern abgegriffenen Ablaufsteuerungen oder Gelenkkoordinaten von den zugehörigen Werten der abgespeicherten Ablaufsteuerungen oder Gelenkkoordinatensätze aufweist.

27. Anordnung nach einem der Ansprüche 24 bis 26, dadurch gekennzeichnet, daß die Bearbeitungseinheit (4) einen auf den Abstand von der zu bearbeitenden Oberfläche, auf seinen Bearbeitungswiderstand oder auf seine Eindringtiefe in die zu bearbeitende Oberfläche ansprechenden Sensor aufweist, und daß von dem Ausgangssignal des Sensors Korrektursignale zur Nachführung der Antriebsaggregate der Knickmastgelenke ableitbar sind.

28. Anordnung nach einem der Ansprüche 24 bis 27, dadurch gekennzeichnet, daß den Schwenk- und/oder Neigungsachsen der Entfernungsbildkamera (40) mindestens ein vorzugsweise auf Deformationen eines Unterbaus des Bearbeitungsgeräts (2) ansprechender Neigungsgeber zugeordnet ist, von dessen Ausgangssignalen Korrektursignale zur Nachführung der Antriebsaggregate der Knickmastgelenke ableitbar sind.

29. Anordnung nach einem der Ansprüche 20 bis 28, dadurch gekennzeichnet, daß das Bearbeitungsgerät (2) bzw. der Ausleger (12) wenigstens einen redundanten Freiheitsgrad aufweist.

30. Anordnung nach einem der Ansprüche 19 bis 29, dadurch gekennzeichnet, daß das Abstellfeld (46) virtueller Natur ist.

## Claims

1. A process for the treatment, in particular for the surface cleaning of an object (1), in particular an airplane (44), a ship, a building, etc., by means of a treating device (2) having at least one treating unit (4), in which the treating device (2) is moved into a parking field (46) at a predetermined reference point (A) and is positioned at a distance from the object (1), whereby the predefined reference point (A) of the parking field (46) has a fixed position reference to at least one reference point of the object, in which the treatment operation to be carried out on the object (1) is carried out at least partially by means of an operating-sequence control for the treating unit (4) of the treating device (2), which treating unit enters into active contact with the object (1), whereby the spacial movements of the at least one treating unit (4), which movements are controlled by the operating-sequence control, are guided with respect to the predefined point (A), characterized in that in the parking field (46) of the treating device (2) there is a specific number of grid points (11, 11a) defining grid fields, that for each grid point (11, 11a) there is set up or will be set up an operating-sequence control for the at least one treating unit (4) of the treating device (2), which treating unit enters into active contact with the object (1) to be treated, whereby the spacial movement of the at least one treating unit (4), which movement is controlled by this operating-sequence control of the grid point (11a), is guided with respect to this grid point (11a) of the parking field (46), that the actual position (P) of the treating device (2) is determined with reference to the parking field (46), that from the number of grid points associated with the parking field (46) the grid point (11a) with the least distance from the actual position (P) of the treating device (2) is determined, and that for carrying out the treatment operation for controlling the at least one treating unit (4) the operating-sequence control associated with the grid point (11a) is used, or that from this grid point (11a) through interpolation an operating-sequence control for the actual position (P) is calculated and stored in the storage of the manipulator control as an actual working program, and is then used.

2. The process according to Claim 1, characterized in that the operating-sequence control associated with the reference point (A) and the ones associated with the grid points (11a) are created off-line.

3. The process according to Claim 1 or 2 characterized in that operating-sequence controls associated with the predefined reference point (A) and the grid points (11a) have as the characteristic parameter the spacial position difference between the fixed reference point of the object (1) and the fixed grid points (11a).

4. The process according to one of the Claims 1 to 3, characterized in that the grid points (11a) are arranged in an equi-distant grid.

5. The process according to one of the preceding claims, characterized in that the parking field (46) is chosen as a circle with the radius R or, preferably, as a regular polygon around the predefined reference point (A).

6. The process according to one of the Claims 1 to 5, characterized in that at least one operating-sequence control associated with a grid point (11a) of the parking field (46) uses as a further characteristic parameter:
a) the relative position between the grid point (11a), which lies the closest to the actual position (P) of the treating device (2), and the actual position (P) of the treating device (2); or
b) deviations of the object (1) from standard dimensions used as the basis for determining the operating-sequence control; or
c) the measuring signals of a monitoring device of the at least one treating unit (4).

7. The process according to one of the Claims 1 to 6, characterized in that at least one operating-sequence control is structured in such a manner that it has a base part depending only on the position of the grid point (11a) associated with said operating-sequence control and a correction/adaption part depending on the distance of the actual position (P) of the treating device (2) from said grid point (11a) and/or additional adaption parameters.

8. The process according to one of the Claims 1 to 7, characterized in that the movements of the at least one treating unit (4) of the treating device (2), which movements are controlled by only the grid-point-dependent part of the operating-sequence control, are carried out, essentially while the on-line corrections of the operating-sequence control, which on-line corrections are needed for the adaption of the operating-sequence control, are determined.

9. The process according to one of the Claims 1 to 8, characterized in that for determining the actual position (P) of the treating device (2) a distance image of a specified section of the object (1) to be treated is taken with an opto-electronic distance camera (40) and is compared with a reference image of this section.

10. The process according to Claim 9, characterized in that deviations resulting therefrom are converted into preferably optically and/or acoustically indicatable steering and driving signals outside of the parking field (46) or into positioned-determining locating signals within the parking field (46).

11. The process according to one of the preceding claims, characterized in that in a treating device (2) consisting of several arms (12, 12', 12'', 12''', 14) pivotal or movable on pivot joints (20, 22, 24, 26, 28) and/or thrust joints, and consisting of an articulated mast (13) arranged on an undercarriage (8), the joints (20 to 28) of the articulated mast (13) and/or of the multiple joint (16) are controlled during the course of the treatment in accordance with a sequence of specified joint-coordinate sets by an operating-sequence control, which sequence is associated with the actual position of the treating device (2) within the parking field (46).

12. The process according to one of the preceding claims, characterized in that the treating unit (4) is moved along a specified treatment path (52) over the surface of the object.

13. The process according to one of the preceding claims, characterized in that the position-referenced operating-sequence control is calculated through interpolation from the operating-sequence control stored in a data bank in accordance with the actual position (P) of the treating device (2) within the parking field (46) and is stored in a stored data file prior to the treatment using operating-sequence control read from the stored data file and possibly additional movement-referenced parameters.

14. The process according to Claim 13, characterized in that the operating-sequence control read from the stored data file follow in accordance with sensor signals preferably extracted at every support point of the treatment path.

15. The process according to one of the preceding claims, characterized in that the frictional resistance, torsional resistance or the contact pressure read at the treating unit (4) is measured and outputted as a sensor signal.

16. The process according to one of the preceding claims, characterized in that the distance of the treating unit (4) from the object (1) is measured without contact and is outputted as a sensor signal.

17. The process according to one of the preceding claims, characterized in that the inclination of the treating device (2) relative to a substructure or relative to the object (1) is measured and is outputted as a sensor signal.

18. The process according to one of the Claims 14 to 17, characterized in that the following operating-sequence control are monitored with respect to freedom from collision through a comparison with operating-sequence control stored with respect to adjacent grid points (11a) taking into consideration specified tolerance limits.

19. An arrangement for the treatment, in particular for the surface cleaning of objects (1), like airplanes (44), ship or buildings, comprising a treating device (2) having at least one treating unit (4), comprising an opto-electronic distance camera (40) arranged on the treating device (2) and alignable with respect to the object (1) to be treated, and a calculator-supported evaluating electronic receiving the distance-image signals of the distance camera (40), characterized in that the evaluating electronics has a storage arrangement for storing of distance-image data of the object (1) from the view of several grid points of a specified parking field (46), and a software routine for comparing the distance-image data taken by the distance-image camera (40) with the treating device (2) being positioned in front of the object (1) within reach of an articulated mast (13) with the stored distance-image data, and for the coordinate-like determining of the position (P) of the treating device (2) within the specified parking field (46) and for the association of the position (P) with the closest grid point (11a).

20. The arrangement according to Claim 19, characterized in that the treating device (2) has several arms (12, 12', 12'', 12''', 14) pivotal with respect to one another on pivot joints (20, 22, 24, 26, 28) by means of hydraulic or motorized driving systems (30), an articulated mast (13) rotatably supported by a base arm (12) about a vertical axis on a pivot-bearing block (9) of the motor-driven undercarriage (8), and has the treating unit (4), preferably designed as a rotating brush head (18) arranged on the last arm (14) of the articulated mast (13) or on the free end of a multiple joint (16) arranged on the last arm (14), has several thrust and/or pivot joints.

21. The arrangement according to Claim 19 or 20, characterized in that the distance camera (40) is arranged near the pivot-bearing block (9) rigidly or movably, in particular pivotally about a vertical axis and/or inclinable about at least one horizontal axis on the treating device (2).

22. The arrangement according to one of the Claims 20 or 21, characterized in that with each joint (20 to 28) of the articulated mast (13) and, if necessary, of the multiple joint (15) is associated a coordinate receiver, preferably in the form of an angle or path receiver, at the output of which a value corresponding with the respective joint coordinate can be electrically read.

23. The arrangement according to Claim 22, characterized in that the evaluating electronics has a calculator-supported circuit for normalizing the joint coordinates in accordance with the tool coordinates measured directly and through the distance camera (40) relative to a stationary, preferably cubic calibration member.

24. The arrangement according to one of the Claims 19 to 23, characterized in that the parking field (46) is divided by a two-dimensional grid field (46), that with each grid point (11) within the grid field (46) is associated an operating-sequence control, a joint-coordinate data file or a moving program within a data bank, in which is stored a series of individual movements or joint-coordinate sets of the articulated mast (13) along an operating path to be travelled by the treating unit (4) on the surface of the object.

25. The arrangement according to Claim 24, characterized in that the evaluating electronics has a software routine for calculating and storing a series of operating-sequence controls or joint-coordinate sets designated for the treatment operation through interpolation from the stored operating-sequence controls or joint-coordinate sets in accordance with the deviation of the actual position (P) of the treating device (2) from the adjacent grid points (11a) within the specified grid field (46).

26. The arrangement according to Claim 24 or 25, characterized in that the evaluating electronics has a calculator-supported circuit for controlling the drive systems (30) of the articulated-mast joints (20 to 28) in accordance with the deviation of the operating-sequence controls or joint coordinates read at the coordinate receivers from the associated values of the stored operating-sequence controls or joint-coordinate sets.

27. The arrangement according to one of the Claims 24 to 26, characterized in that the treating unit (4) has a sensor, which reacts to the distance from the surface to be treated, to its operating resistance or to its depth of penetration into the surface to be treated, and that from the output signal of the sensor correcting signals can be derived to have the driving systems of the articulated-mast joints follow.

28. The arrangement according to one of the Claims 24 to 27, characterized in that the at least one inclination indicator reacting preferably to deformations in the substructure of the treating device (2) is associated with the pivot and/or inclination axes of the distance camera (40), from the output signals of the inclination indicator there can be derived correcting signals to have the driving systems of the articulated-mast joints follow.

29. The arrangement according to one of the Claims 20 to 28, characterized in that the treating device (2) or the arm (12) has at least one redundant degree of freedom.

30. The arrangement according to one of the Claims 19 to 29, characterized in that the parking field (46) is of a virtual nature.

## Revendications

1. Procédé de traitement, notamment de nettoyage de la surface d'un objet (1), en particulier d'un avion (44), d'un bateau, d'un bâtiment, etc. au moyen d'au moins un appareil de traitement (2) comprenant une unité de traitement (4), selon lequel l'appareil de traitement (2) est déplacé dans une zone d'installation (46) autour d'un point de référence (A) prédéfini et positionné à distance de l'objet (1), le point de référence (A) prédéfini de la zone d'installation (46) présentant une relation de position fixe par rapport à au moins un point de référence de l'objet (1), dans lequel l'opération de traitement à effectuer sur l'objet (1) est réalisée au moins en partie au moyen d'une commande séquentielle pour l'unité de traitement (4) de l'appareil de traitement (2) entrant en contact actif avec l'objet (1), les mouvements dans l'espace de l'unité de traitement (4) au nombre d'au moins une commandés par la commande séquentielle sont rapportés au point (A) prédéfini, **caractérisé en** ce que dans la zone d'installation (46) de l'appareil de traitement (2), on fixe un nombre déterminé de points de trame (11, 11a) délimitant des champs de trame, que pour chaque point de trame (11, 11a), une commande séquentielle est ou sera établie pour l'unité de traitement (4) au nombre d'au moins une de l'appareil de traitement (2) entrant en contact actif avec les objets (1) à traiter, ce mouvement dans l'espace de l'unité de traitement (4) au nombre d'au moins une commandé par la commande séquentielle du point de trame (11a) considéré est rapporté à ce point de trame (11a) de la zone d'installation (46), que l'on détermine la position momentanée (P) de l'appareil de traitement (2) par rapport à la zone d'installation (46), que l'on détermine parmi la quantité des points de trame associés à la zone d'installation (46) le point de trame (11a) qui est le plus proche de la position momentanée (P) de l'appareil de traitement (2), et que, pour l'exécution de l'opération de traitement, on utilise pour la commande de l'unité de traitement (4) au nombre d'au moins une, la commande séquentielle associée audit point de trame (11a) ou que l'on calcule par interpolation, à partir de ce point de trame (11a), une commande séquentielle pour la position momentanée (P) qui est stockée dans la mémoire de travail de la commande du manipulateur, puis utilisée comme programme de travail momentané.

2. Procédé selon la revendication 1, caractérisé en ce que les commandes séquentielles associées au point de référence (A) et aux points de trame (11a) sont établies off-line.

3. Procédé selon la revendication 1 ou 2, caractérisé en ce que les commandes séquentielles associées au point de référence (A) prédéfini et aux points de trame (11a) contiennent comme paramètres caractéristiques, la différence de position entre le point de référence de l'objet (1) défini dans l'espace et les points de trame (11a) fixés dans l'espace.

4. Procédé selon l'une des revendications 1 à 3, caractérisé en ce que les points de trame (11a) sont disposés dans une trame équidistante.

5. Procédé selon l'une des revendications précédentes, caractérisé en ce que la zone d'installation (46) présente la forme d'un cercle avec le rayon R ou celle d'un polygone, de préférence régulier, autour du point de référence (A) prédéfini.

6. Procédé selon l'une des revendications 1 à 5, caractérisé en ce qu'au moins une commande séquentielle associée à un point de trame (11a) de la zone d'installation (46) comprend comme paramètre caractéristique supplémentaire
a) la position relative entre le point de trame (11a) le plus proche de la position momentanée (P) de l'appareil de traitement (2) et la position momentanée (P) de l'appareil de traitement (2) ou
b) les écarts de l'objet (1) par rapport aux dimensions standard prises comme base pour l'établissement de la commande séquentielle, ou
c) les signaux de mesure d'un dispositif de surveillance de l'unité de traitement (4) au nombre d'au moins une.

7. Procédé selon l'une des revendications 1 à 6 caractérisé en ce qu'au moins une commande séquentielle est structurée de telle façon qu'elle comprend un élément de base qui dépend uniquement de la position du point de trame (11a) associé à cette commande séquentielle, et un élément de correction/d'adaptation qui dépend de la distance entre la position momentanée (P) de l'appareil de traitement (2) et dudit point de trame (11a) et/ou des paramètres d'adaptation supplémentaires.

8. Procédé selon l'une des revendications 1 à 7, caractérisé en ce que les mouvements de l'unité de traitement (4) au nombre d'au moins une de l'appareil de traitement (2), contrôlés uniquement par la partie de la commande séquentielle dépendant du point de trame sont exécutés pendant que sont déterminées on-line les corrections de la commande séquentielle nécessaires pour l'adaptation de la commande séquentielle.

9. Procédé selon l'une des revendications 1 à 8, caractérisé en ce que pour la détermination de la position momentanée (P) de l'appareil de traitement (2) une image de distance d'une partie prédéterminée de l'objet (1) à traiter est réalisée avec une caméra d'imagerie à distance (40) optoélectronique et comparée avec une image de référence de cette partie.

10. Procédé selon la revendication 9, caractérisé en ce que les écarts alors obtenus sont convertis en signaux de direction et de conduite à l'extérieur de la zone d'installation (46), affichable de préférence de manière optique et/ou acostique, ou en signaux d'étalonnage à l'intérieur de la zone d'installation (46) qui définissent la position.

11. Procédé selon l'une des revendications précédentes, caractérisé en ce que pour un appareil de traitement (2) constitué par un mât articulé (13) monté sur un châssis (8) et se composant de plusieurs cantilevers (12, 12', 12'', 12''', 14) pouvant être pivotés ou déplacés les uns par rapport aux autres sur des articulations tournantes (20, 22, 24, 26, 28) et/ou joints à glissières, et éventuellement d'une articulation multiple (16) fixée sur le cantilever d'extrémité (14), les articulations (20 à 28) du mât articulé (13) et/ou de l'articulation multiple (16) sont commandées au cours du traitement en fonction d'une série de jeux de coordonnées d'articulations prédéterminée en tant que commande séquentielle et associée à une position de l'appareil de traitement (2) à l'intérieur de la zone d'installation (46).

12. Procédé selon l'une des revendications précédentes, caractérisé en ce que l'unité de traitement (4) est déplacée sur la surface de l'objet le long d'une trajectoire de traitement (52) prédéterminée.

13. Procédé selon l'une des revendications précédentes, caractérisé en ce que la commande séquentielle rapportée à la position est calculée à partir des commandes séquentielles mémorisées dans une banque de données, en fonction de la position momentanée (P) de l'appareil de traitement (2) à l'intérieur de la zone d'installation (46), et enregistrée dans un fichier de travail avant que le traitement soit déclenché, avec utilisation des commandes séquentielles appelées dans le fichier de travail et éventuellement de paramètres supplémentaires relatifs aux mouvements.

14. Procédé selon la revendication 13, caractérisé en ce que les commandes séquentielles extraites du fichier de travail sont asservies en fonction de signaux de détection interrogés de préférence à chaque point fixe de la trajectoire de traitement.

15. Procédé selon l'une des revendications précédentes, caractérisé en ce que la résistance due au frottement, la résistance due à la torsion ou la force de pression prélevées sur l'unité de traitement (4) sont mesurées et prélevées comme signal de détection.

16. Procédé selon l'une des revendications précédentes, caractérisé en ce que la distance entre l'unité de traitement (4) et l'objet (1) est mesurée sans contact et prélevée comme signal de détection.

17. Procédé selon l'une des revendications précédentes, caractérisé en ce que l'inclinaison de l'appareil de traitement (2) par rapport à une infrastructure ou à l'objet (1) est mesurée et prélevée comme signal de détection.

18. Procédé selon l'une des revendications 14 à 17, caractérisé en ce que les commandes séquentielles asservies sont vérifiées par comparaison avec des commandes séquentielles mémorisées pour des points de trame (11a) voisins, en tenant compte des limites de tolérances eu égard à l'absence de collisions.

19. Agencement pour le traitement, notamment pour le nettoyage des surfaces d'objets (1) tels que des avions (44), des bateaux ou des constructions, comprenant un appareil de traitement (2) équipé d'au moins une unité de traitement (4), une caméra d'imagerie à distance optoélectronique (40) montée sur l'appareil de traitement (2) et pouvant être dirigée vers l'objet (1) à traiter, et une électronique d'interprétation assistée par ordinateur à laquelle sont transmis les signaux d'images de distance de la caméra d'imagerie à distance (40), **caractérisé en** ce que l'électronique d'interprétation comprend un système de mémorisation pour le stockage de données-image de distance de l'objet (1) déterminées à partir de plusieurs point de trame d'une zone d'installation (46), ainsi qu'une routine logicielle pour la comparaison des données-image de distance enregistrées par la caméra d'imagerie à distance (40) montée sur l'appareil de traitement (2) positionné devant l'objet (1) dans le rayon d'action d'un mât articulé (13), avec les données-image de distance mémorisées et pour la détermination des coordonnées de la position (P) de l'appareil de traitement (2) à l'intérieur de la zone d'installation (46) limitée prédéterminée ainsi que pour l'association de cette position (P) au point de trame (11a) le plus proche.

20. Agencement selon la revendication 19, caractérisé en ce que l'appareil de traitement (2) comprend plusieurs cantilevers (12, 12', 12'', 12''', 14) pouvant être pivotés les uns par rapport aux autres sur des articulations tournantes (20, 22, 24, 26, 28) au moyen de mécanismes d'entraînement (30) hydrauliques ou motorisés, un mât articulé (13) monté sur un support tournant (9) du châssis (8) motorisé, dont le cantilever de base (12) peut être tourné autour d'un axe vertical, et l'unité de traitement (4) conformée de préférence en tête porte-brosse (18) tournante, montée sur le cantilever d'extrémité (14) du mât articulé (13) ou sur l'extrémité libre d'une articulation multiple (16) équipée de plusieurs joints à glissières et/ou articulations tournantes.

21. Agencement selon la revendication 19 ou 20, caractérisé en ce que la caméra d'imagerie à distance (40) est disposée de manière rigide ou mobile à proximité du support tournant (9), et notamment de façon à pouvoir être tournée autour d'un axe vertical et/ou inclinée autour d'au moins un axe horizontal sur l'appareil de traitement (2).

22. Agencement selon la revendication 20 ou 21, caractérisé en ce qu'à chaque articulation (20 à 28) du mât articulé (13) et éventuellement de l'articulation multiple (16) est associé un enregistreur de coordonnées, de préférence sous la forme d'un capteur d'angle et de déplacement, à la sortie duquel peut être prélevée électriquement une valeur correspondant à la coordonnée de l'articulation considérée.

23. Agencement selon la revendication 22, caractérisé en ce que l'électronique d'interprétation comprend un élément assisté par ordinateur pour la normalisation des coordonnées d'articulations en fonction des coordonnées de l'outil mesurées directement et par l'intermédiaire de la caméra d'imagerie à distance (40) par rapport à un corps d'étalonnage fixe, de préférence de forme cubique.

24. Agencement selon l'une des revendications 19 à 23, caractérisé en ce que la zone d'installation (46) est subdivisée par une trame bidimensionnelle (46), qu'à chaque point de trame (11) à l'intérieur de la trame (46) est associée une commande séquentielle, un fichier de coordonnées d'articulations ou un programme de mouvement à l'intérieur d'une banque de données, la succession des mouvements individuels ou des jeux de coordonnées d'articulations du mât articulé (13) le long d'une trajectoire de traitement à parcourir sur la surface de l'objet par l'unité de traitement (4) étant mémorisée.

25. Agencement selon la revendication 24, caractérisé en ce que l'électronique d'interprétation comprend une routine logicielle pour le calcul et la mémorisation d'une succession de commandes séquentielles ou de jeux de coordonnées d'articulations destinée au processus de traitement, par interpolation à partir des commandes séquentielles ou des jeux de coordonnées d'articulations mémorisées, en fonction de l'écart de la position momentanée (P) de l'appareil de traitement (2) par rapport au point de trame (11a) le plus proche à l'intérieur de la trame (46) prédéterminée.

26. Agencement selon la revendication 24 ou 25, caractérisé en ce que l'électronique d'interprétation comprend un élément assisté par ordinateur pour la commande des mécanismes d'entraînement (30) des articulations (20 à 28) du mât articulé en fonction de l'écart entre les commandes séquentielles ou les coordonnées d'articulations prélevées sur les enregistreurs de coordonnées et les valeurs associées des commandes séquentielles ou des jeux de coordonnées d'articulations mémorisées.

27. Agencement selon l'une des revendications 24 à 26, caractérisé en ce que l'unité de traitement (4) comprend un détecteur répondant à la distance par rapport à la surface à traiter, à sa résistance au traitement ou à sa profondeur de pénétration dans la surface à traiter, et que le signal de sortie du détecteur permet de dériver des signaux de correction pour l'asservissement des mécanismes d'entraînement des articulations du mât articulé.

28. Agencement selon l'une des revendications 24 à 27, caractérisé en ce qu'aux axes de pivotement et/ou d'inclinaison de la caméra d'imagerie à distance (40) est associé au moins un capteur d'inclinaison qui répond de préférence aux déformations d'une infrastructure de l'appareil de traitement (2) et dont les signaux de sortie permettent de dériver des signaux de correction pour l'asservissement des mécanismes d'entraînement des articulations du mât articulé.

29. Agencement selon l'une des revendications 20 à 28, caractérisé en ce que l'appareil de traitement (2) et respectivement le cantilever (12) présentent au moins un degré de liberté redondant.

30. Agencement selon l'une des revendications 19 à 29, caractérisé en ce que la zone d'installation (46) est de nature virtuelle.
